# EUROPÄISCHE PATENTANMELDUNG

(11) **EP 0 810 421 A1**
(43) Veröffentlichungstag der Anmeldung: **03.12.1997**
(21) Anmeldenummer: 97106386.2
(22) Anmeldetag: 17.04.1997
(51) Int. Cl.: G01F 3/08

(54) **Durchflussmesser für flüssige Medien**

(30) Priorität: 31.05.1996 DE 29609714 U
(71) Anmelder: KEM KÜPPERS ELEKTROMECHANIK GMBH, D-85757 Karlsfeld (DE)
(72) Erfinder: Pucher, Hans-Jürgen, Dipl.-Ing., 85253 Interweikersthofen (DE)
(74) Vertreter: Heim, Hans-Karl, Dipl.-Ing.

(57) **Zusammenfassung**

Zur Messung von flüssigen Medien mit kleinem Durchfluß werden Durchflußmesser mit einer Umlaufkolben-Einrichtung mit zwei gekoppelt umlaufenden Kolben und einer Kolbenanlenkung eingesetzt. Um mit einem solchen Durchflußmesser bei besonders einfachem Aufbau eine präzise und zuverlässige Messung zu ermöglichen wird die Bewegung der Kolbenanlenkung durch einen in dem Gehäuse angeordneten elektromagnetischen Sensor überwacht, der so positioniert ist, daß er einem Bewegungsbereich der Kolbenanlenkung zugeordnet ist.

## Beschreibung

Die Erfindung betrifft einen Durchflußmeser für flüssige Medien mit kleinem Durchfluß, der ein Gehäuse mit Einlaß und Auslaß und eine Umlaufkolben-Einrichtung aufweist, wobei die Umlaufkolben-Einrichtung zwei gekoppelte umlaufende Kolben und eine Kolbenanlenkung aufweist.

Derartige Durchflußmesser werden meistens für dünnflüssige Medien wie z.B. Wasser, Lösungsmittel, Infusionslösungen oder Additive eingesetzt und eignen sich zur Messung von Durchflüssen in der Größenordnung von 1 cm³ pro Minute und größer. Diese Durchflußmesser, die auch als Microflowmeter bekannt sind und sehr präzise arbeiten, werden beispielsweise in der Pharmazie benötigt.

Die Umlaufkolben-Einrichtung bewegt sich entsprechend dem Durchfluß mit einer bestimmten Geschwindigkeit oder Frequenz hin und her, so daß aus der Messung dieser Bewegung auf den Durchfluß geschlossen werden kann. Die Messung erfolgt mit einem beweglich aufgehängtem Magnetstift, der in seiner Bewegung der Bewegung der darunterliegenden Umlaufkolben-Einrichtung folgen kann und dessen Bewegung mit einer Lichtschranke optisch detektiert wird. Aus dieser Information kann auf den Durchfluß geschlossen werden. Die Art der Signaldetektion mittels beweglichen / pendelnden magnetischen Teilen birgt im harten industriellen Einsatz ein großes Potential für Störungen.

Der Erfindung liegt die **Aufgabe** zugrunde, einen Durchflußmesser der eingangs genannten Art zu schaffen, der besonders einfach aufgebaut ist und eine präzise und zuverlässige Messung des Durchflusses möglich macht.

Die Lösung dieser Aufgabe erfolgt mit den kennzeichnenden Merkmalen des Anspruchs 1. Vorteilhafte Weiterbildungen sind in den Unteransprüchen beschrieben.

Nach einem Grundgedanken der Erfindung ist in dem Gehäuse ein elektromagnetischer Sensor angeordnet, wobei der elektromagnetische Sensor sowohl in einer Gehäusewand selbst als auch als zusätzliche Baugruppe an oder im Bereich der Gehäusewand befestigt sein kann. Entscheidend dabei ist, daß der elektromagnetische Sensor so positioniert ist, daß er einem Bewegungsbereich der Kolbenanlenkung zugeordnet ist und im Bereich des Gehäuses so nah an der Kolbenanlenkung positioniert ist, daß er diese elektromagnetisch erfassen kann. Weiterhin ist von Bedeutung, daß ein entsprechender Teilbereich der Kolbenanlenkung aus einem für den elektromagnetischen Sensor detektierbaren Material besteht. Das Wort Kolbenanlenkung kann in diesem Zusammenhang sehr weit verstanden werden, d. h., daß auch die Kolben selbst unter diesen Begriff fallen. In manchen Ausführungsformen wird die Bewegung der Kolben erfaßt.

Alternativ läßt sich der Grundgedanke der Erfindung auch dadurch beschreiben, daß die Kolbenanlenkung mindestens in einem Teilbereich magnetisch oder magnetisch leitfähig ausgebildet ist, daß ein elektromagnetischer Sensor dem magnetischen Teilbereich zugeordnet ist, und daß die Auslenkung des magnetischen Teilbereichs der Kolbenanlenkung als Funktion von Auslenkungsstrecke und Zeit mittels des elektromagnetischen Sensors erfaßbar ist.

Mit einem solchen Durchflußmesser wird eine wesentlich vereinfachte und störsichere Messung der Kolbenauslenkung möglich, die außerdem die Bewegung der umlaufenden Kolben in einem Frequenzbereich von 1 Hz bis 1 kHz sehr genau erfassen kann. Ein weiterer Vorteil des erfindungsgemäßen Durchflußmessers ist es, daß zur Detektion der Pendelbewegung im Inneren des Durchflußmessers keine bewegten Teile benötigt werden.

In einer bevorzugten Ausführungsform weist die Kolbenanlenkung eine Kolbenkopplung und eine Kopplungsanlenkung auf, wobei die Kopplungsanlenkung gelenkig mit der Kolbenkopplung verbunden ist. Sowohl die Kolbenkopplung als auch die Kopplungsanlenkung bewegen sich in Abhängigkeit vom Durchfluß, so daß durch Detektion der Bewegung der Kolbenkopplung oder der Kopplungsanlenkung der Durchfluß bestimmt werden kann. In einer bevorzugten Ausführungsform ist der elektromagnetische Sensor der Kopplungsanlenkung zugeordnet und im Bereich der Verbindung von Kolbenkopplung und Kopplungsanlenkung angeordnet. Dadurch befindet sich der elektromagnetische Sensor im Bereich der maximalen Auslenkung der Kopplungsanlenkung so daß die Detektion in diesem Bereich besonders einfach ist. In einer anderen bevorzugten Ausführungsform der Erfindung ist der Sensor der Kolbenkopplung zugeordnet und ist im Bereich der Kolbenkopplung benachbart zu den umlaufenden Kolben angeordnet. Im Übergangsbereich der Kolbenkopplung zu den umlaufenden Kolben ist die Auslenkung der Kolbenkopplung maximal, so daß hier die Messung der Bewegung der Kolbenkopplung besonders einfach und zuverlässig ist.

In einer bevorzugten Weiterbildung der Erfindung besteht ein Teilbereich der Kolbenanlenkung aus einem ferromagnetischen Material, weil dieses für den elektromagnetischen Sensor besonders einfach detektierbar ist. Dies kann beispielsweise Eisen, Nickel oder Kobalt sein. Grundsätzlich könnte auch ein paramagnetisches oder diamagnetisches Material gewählt werden, jedoch ist zu deren Detektion ein besonders empfindlicher elektromagnetischer Sensor nötig, so daß besondere Anforderungen an den Abstand des Sensors zu dem detektierten Bereich zu stellen sind. In einer anderen bevorzugten Ausführungsform ist der zu detektierende Teilbereich der Kolbenanlenkung selbst magnetisch.

Günstigerweise ist der elektromagnetische Sensor in einer Sacklochbohrung in dem Gehäuse angeordnet, so daß er möglichst benachbart zu der Kolbenanlenkung angeordnet ist und im Innenbereich des Gehäuses keine Vorsprünge oder Ecken entstehen, die zu einer Verwirbelung der zu messenden Flüssigkeit oder zu Toträumen führen.

Das Gehäuse besteht günstigerweise im Bereich des elektromagnetischen Sensors aus einem magnetisch neutralen Material wie z.B. Kunststoff. Günstigerweise besteht das gesamte Gehäuse aus Kunststoff oder einem nicht ferromagnetischen Metall wie z.B. Aluminium.

Der elektromagnetische Sensor wird bevorzugt in der Form eines Induktivsensors, eines Halleffekt-Sensors oder eines Trägerfrequenz-Sensors realisiert.

In einer anderen Weiterentwicklung der Erfindung werden mindestens zwei elektromagnetische Sensoren verwendet. Diese können einem und bevorzugt verschiedenen Bewegungsbereichen der Kolbenanlenkung zugeordnet sein, so daß dadurch eine redundante Signalgewinnung oder eine Frequenzvervielfachung zur Erhöhung der Auflösung des Meßgeräts erreicht wird. Bevorzugt werden die zwei oder mehr Sensoren dem Bewegungsbereich der Kolben selbst zugeordnet.

Nachfolgend wird die Erfindung anhand eines in der Zeichnung dargestellten Ausführungsbeispiels weiter erläutert. Im einzelnen zeigen die schematischen Darstellungen in:
- Fig. 1: einen Querschnitt durch einen erfindungsgemäßen Durchflußmesser mit zwei gekoppelten umlaufenden Kolben;
- Fig. 2: acht verschiedene Bewegungsstadien (Fig. 2a bis Fig. 2h) des Durchflußmessesrs aus Fig. 1 zur Verdeutlichung der Funktionsweise der Umlaufkolben-Einrichtung;
- Fig. 3: eine perspektivische Ansicht eines erfindungsgemäßen Durchflußmessers ohne die Kolbenanlenkung;
- Fig. 4: eine perspektivische Ansicht der Kolbenkopplung mit den Kolben; und
- Fig. 5.: eine perspektivische Ansicht der Kopplungsanlenkung.

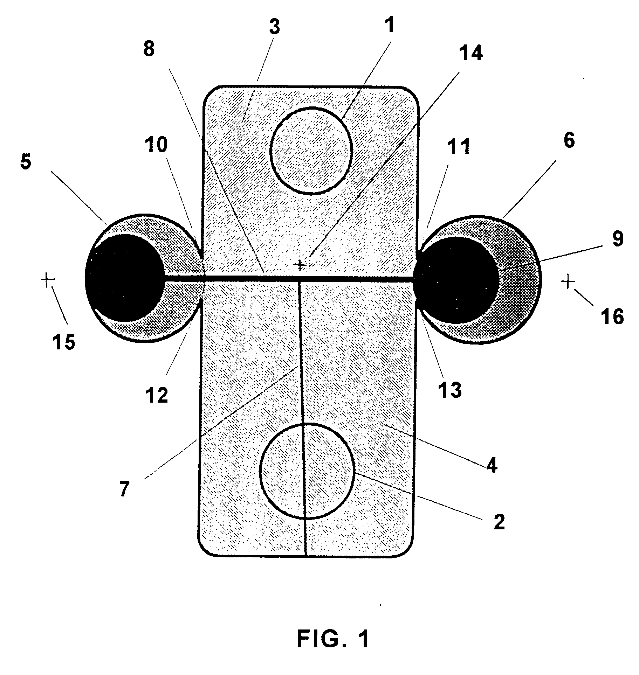

In Fig. 1 ist ein Durchflußmesser mit einer Einströmbohrung 1, einer Ausströmbohrung 2, einer Einströmkammer 3, einer Ausströmkammer 4 und einer Meßkammer links und rechts 5, 6 in denen sich die umlaufenden Kolben 9 bewegen, dargestellt. Die umlaufenden Kolben 9 sind durch eine Kolbenkopplung 8 verbunden, die gelenkig mit einer Kopplungsanlenkung 7 in der Ausströmkammer 4 befestigt ist. Insgesamt werden Kopplungsanlenkung 7 und Kolbenkopplung 8 als Kolbenanlenkung bezeichnet.

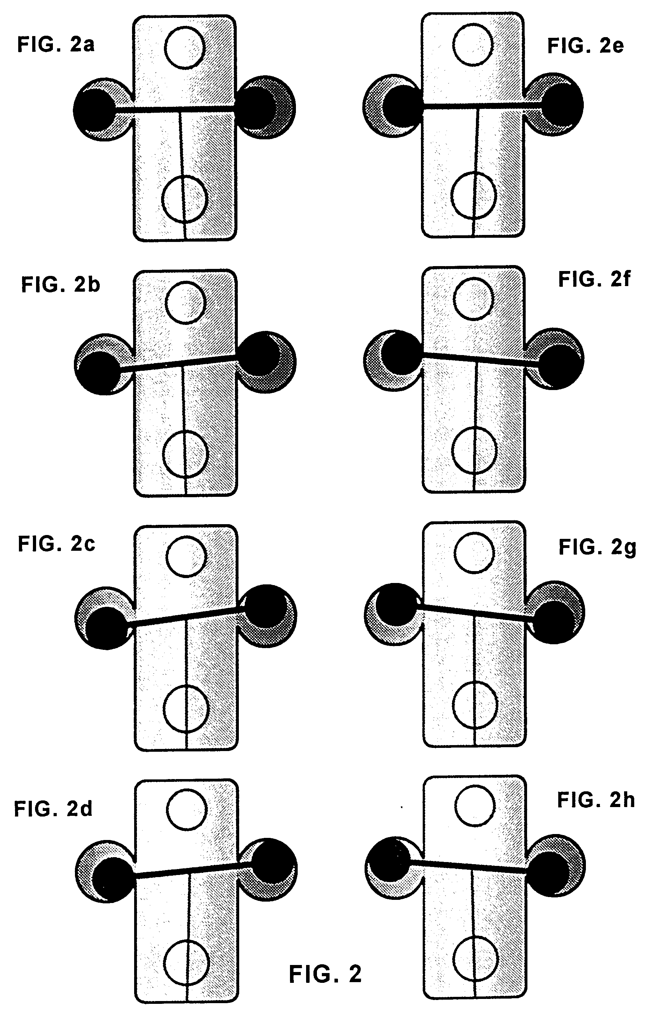

Der hier dargestellte Durchflußmesser arbeitet mit einer kreiskolbenartigen Umlaufkolben-Einrichtung, die als kreiseingriffsähnlich klassifiziert werden kann. Ein dünnflüssiges Medium strömt durch die Einströmbohrung 1 in die Einströmkammer 3, von dort aus in die Meßkammer 5, 6 um durch die Ausströmkammer 4 und die Ausströmbohrung 2 das Gerät wieder zu verlassen. Zwischen Einlaß und Auslaß sind Öffnungen zwischen den Punkten 10 und 12 und zwischen den Punkten 11 und 13 vorgesehen, durch die das Medium in die Meßkammer 5, 6 eintritt und abhängig von der Durchflußgeschwindigkeit die umlaufenden Kolben 9 in Bewegung versetzt. Der Bewegungsablauf der umlaufenden Kolben 9 ist in einzelnen Stadien in Fig. 2 dargestellt, die das Bewegungsprinzip verdeutlicht. Ein elektromagnetischer Sensor 14 ist in einer Sacklochbohrung im Gehäuse angeordnet, wobei die Sacklochbohrung im Bereich der gelenkigen Verbindung von Kopplungsanlenkung 7 und Kolbenkopplung 8 angeordnet ist, so daß die Bewegung der Kopplungsanlenkung 7 am Ort ihrer maximalen Auslenkung erfaßt werden kann. Das Endstück der Kopplungsanlenkung 7 besteht in diesem Fall aus einem ferromagnetischen Material, welches vom elektromagnetischen Sensor besonders gut detektiert werden kann. Alternativ kann der elektromagnetische Sensor auch im Bereich zwischen den Punkten 10 und 12 oder zwischen den Punkten 11 und 13 angeordnet sein, so daß die Bewegung der Kolbenkopplung 8 im Bereich der maximalen Auslenkung der Kolbenkopplung 8 erfaßt werden kann.

Alternativ zu dem elektromagnetischen Sensor 14 können auch zwei oder noch mehr elektromagnetische Sensoren an den Positionen 15 und 16 angeordnet werden, mit denen die Bewegung der Kolben 9 aber auch noch die der Kolbenkopplung 8 erfaßt werden kann. Durch die Verwendung von zwei elektromagnetischen Sensoren erhält man eine redundante Signalgewinnung oder eine Frequenzvervielfachung wodurch die Auflösung des Meßgerätes verdoppelt werden kann.

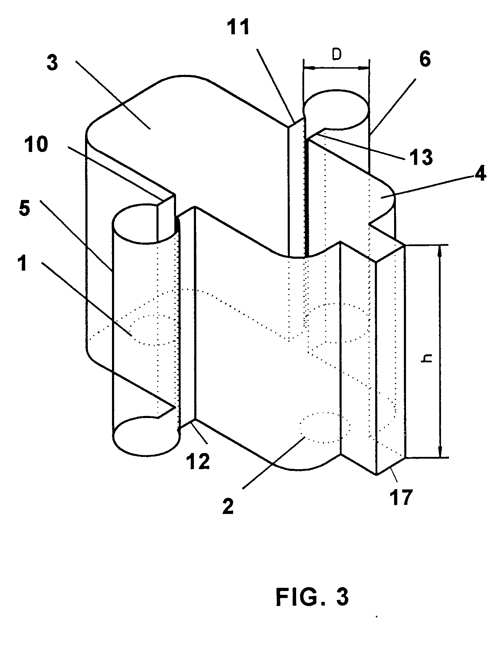

In Fig. 3 ist eine perspektivische Ansicht des Durchflußmessers, genauer gesagt des Gehäuses des Durchflußmessers dargestellt. Die Einströmbohrung 1 und die Ausströmbohrung 2, die Einlaß und Auslaß bilden, sind beide auf der Unterseite des Gehäuses angeordnet. Das längliche Gehäuse wird in dem einen Bereich mit der Einströmbohrung 1 als Einströmkammer 3 und in dem anderen Endbereich mit der Ausströmbohrung 2 als Ausströmkammer 4 bezeichnet. Zwischen diesen beiden Bereichen sind an den Seiten die Meßkammern 5 und 6 vorgesehen, die von dem zu messenden Medium durchströmt werden und in denen die umlaufenden Kolben 9 bewegt werden. Die Meßkammern 5 und 6 sind mit kurzen Übergängen von dem Gehäuse abgesetzt. Auf diesen Übergängen sind die Punkte 10 und 12 bei der Meßkammer 5 und die Punkte 11 und 13 bei der Meßkammer 6 gekennzeichnet. Die Meßkammern 5 und 6 weisen einen Durchmesser D und die gesamte Kammer weist eine Höhe h auf. Im Endbereich der Ausströmkammer 4 ist eine Ausbuchtung 17 vorgesehen, die zur Aufnahme und Lagerung eines entsprechend angepaßten Teils der Kopplungsanlenkung 7 vorgesehen ist.

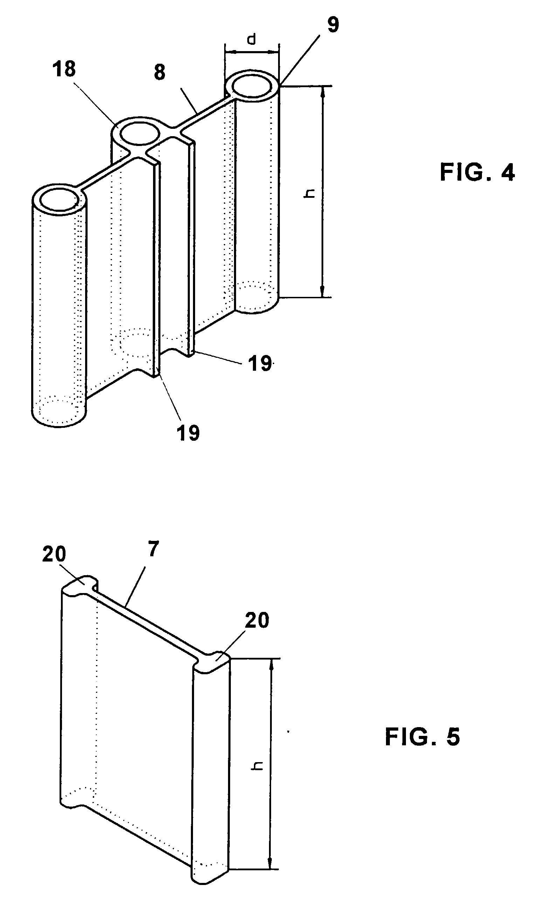

In Fig. 4 ist die Kolbenkopplung 8 mit den Kolben 9 dargestellt. Die Kolbenkopplung 8 stellt die Trennung zwischen Einströmkammer 3 und Ausströmkammer 4 dar. Die Kolben 9, die einen äußeren Durchmesser d aufweisen sind in den Meßkammern 5 und 6 positioniert, wobei der Durchmesser d der Kolben 9 um einiges kleiner ist als der innere Durchmesser D der Meßkammern 5 und 6, so daß die Kolben 9 in den Meßkammern 5 und 6 umlaufen können, wie in Fig. 2 dargestellt ist. Durch die Veränderung der Bauhöhe h, von Umlaufkolben und Kolbenanlenkung, sowie des Durchmessers D der Meßkammer 5 und des Durchmessers d der Kolben 9 kann der Meßbereich verändert werden. Die Kolben 9 sind hohl ausgebildet. Weiterhin ist im zentralen Bereich der Kolbenkopplung 8 ein der Einströmkammer 3 zugewandter zylindrischer Vorsprung 18 angeordnet, der zum einen die Stabilität der Kolbenkopplung 8 erhöht und zum anderen zu einem besseren Strömungsverhalten innerhalb der Einströmkammer 3 führt und das einströmende flüssige Medium gleichmäßig zu den Maßkammern 5 und 6 strömen läßt. Der zylindrische Vorsprung 18 ist ebenfalls hohl ausgebildet. In Verlängerung des zylindrischen Vorsprungs 18 sind an der Kolbenkopplung 8 zur Ausströmkammer 4 hin zwei parallele Vorsprünge 19 vorgesehen, die zur Aufnahme der in Fig. 5 perspektivisch dargestellten Kopplungsanlenkung 7 dienen. Die Kopplungsanlenkung 7 weist an beiden Enden T-förmige Ausbauchungen 20 auf, die auf der einen Seite in die parallelen Vorsprünge 19 der Kolbenkopplung 8 und auf der anderen Seite in die Ausbuchtung 7 in der Ausströmkammer 4 eingreifen und so eine gelenkige Verbindung bilden.

## Patentansprüche

1. Durchflußmesser für flüssige Medien mit kleinem Durchfluß, der ein Gehäuse mit Einlaß und Auslaß und eine Umlaufkolben-Einrichtung aufweist, wobei die Umlaufkolben-Einrichtung zwei gekoppelte umlaufende Kolben und eine Kolbenanlenkung aufweist,
dadurch **gekennzeichnet**,
daß in dem Gehäuse ein elektromagnetischer Sensor angeordnet ist,
daß der elektromagnetische Sensor so positioniert ist,
daß er einem Bewegungsbereich der Kolbenanlenkung (7, 8) zugeordnet ist, und
daß die Kolbenanlenkung (7,8) mindestens in einem Teilbereich aus einem für den elektromagnetischen Sensor detektierbaren Material besteht.

2. Durchflußmesser nach Anspruch 1,
dadurch **gekennzeichnet**,
daß die Kolbenanlenkung eine Kolbenkopplung (8) und eine Kopplungsanlenkung (7) aufweist, wobei die Kopplungsanlenkung (7) gelenkig mit der Kolbenkopplung (8) verbunden ist.

3. Durchflußmesser nach Anspruch 1 oder 2,
dadurch **gekennzeichnet**,
daß der elektromagnetische Sensor der Kopplungsanlenkung (7) zugeordnet ist.

4. Durchflußmesser nach einem der Ansprüche 1 bis 3,
dadurch **gekennzeichnet**,
daß der elektromagnetische Sensor im Bereich der Verbindung von Kolbenkopplung (8) und Kopplungsanlenkung (7) angeordnet ist.

5. Durchflußmesser nach einem der Ansprüche 1 oder 2,
dadurch **gekennzeichnet**,
daß der elektromagnetische Sensor der Kolbenkopplung (8) zugeordnet ist.

6. Durchflußmesser nach Anspruch 5,
dadurch **gekennzeichnet**,
daß der elektromagnetische Sensor benachbart zu der Umlaufkolben-Einrichtung angeordnet ist.

7. Durchflußmesser nach einem der vorhergehenden Ansprüche,
dadurch **gekennzeichnet**,
daß der für den elektromagnetischen Sensor detektierbare Teilbereich der Kolbenanlenkung ferromagnetisch ist.

8. Durchflußmesser nach einem der Ansprüche 1 bis 6,
dadurch **gekennzeichnet**,
daß der für den elektromagnetischen Sensor detektierbare Teilbereich der Kolbenanlenkung magnetisch ist.

9. Durchflußmesser nach einem der vorhergehenden Ansprüche,
dadurch **gekennzeichnet**,
daß der Sensor in einer Sacklochbohrung angeordnet ist.

10. Durchflußmesser nach einem der vorhergehenden Ansprüche,
dadurch **gekennzeichnet**,
daß die Umlaufkolben-Einrichtung kreiseingriffsähnlich ausgebildet ist.

11. Durchflußmesser nach einem der vorhergehenden Ansprüche,
dadurch **gekennzeichnet**,
daß das Gehäuse mindestens im Bereich des elektromagnetischen Sensors aus einem magnetisch neutralen Material besteht.

12. Durchflußmesser nach einem der vorhergehenden Ansprüche,
dadurch **gekennzeichnet**,
daß der elektromagnetische Sensor ein induktiver Sensor ist.

13. Durchflußmesser nach einem der Ansprüche 1 bis 11,
dadurch **gekennzeichnet**,
daß der elektromagnetische Sensor ein Halleffek-Sensor ist.

14. Durchflußmesser nach einem der Ansprüche 1 bis 11,
dadurch **gekennzeichnet**,
daß der elektromagnetische Sensor ein Trägerfrequenz-Sensor ist.

15. Durchflußmesser nach einem der vorhergehenden Ansprüche,
dadurch **gekennzeichnet**,
daß zwei oder mehr elektromagnetische Sensoren (15, 16) vorgesehen sind.
